(19) Europäisches Patentamt
European Patent Office
Office européen des brevets

(11) **EP 1 714 166 B1**

(12) **FASCICULE DE BREVET EUROPEEN**

(45) Date de publication et mention
de la délivrance du brevet:
**12.09.2007 Bulletin 2007/37**

(21) Numéro de dépôt: **05707894.1**

(22) Date de dépôt: **31.01.2005**

(51) Int Cl.:
**G01S 5/14** $^{(2006.01)}$    **G01C 21/16** $^{(2006.01)}$

(86) Numéro de dépôt international:
**PCT/EP2005/050390**

(87) Numéro de publication internationale:
**WO 2005/088337 (22.09.2005 Gazette 2005/38)**

(54) **DISPOSITIF DE SURVEILLANCE DE L INTEGRITE DES INFORMATIONS DELIVREES PAR UN SYSTEME HYBRIDE INS/GNSS**

EINRICHTUNG ZUM ÜBERWACHEN DER INTEGRITÄT VON DURCH EIN HYBRIDES INS/GNSS-SYSTEM ABGELIEFERTEN INFORMATIONEN

DEVICE FOR MONITORING THE INTEGRITY OF INFORMATION DELIVERED BY A HYBRID INS/GNSS SYSTEM

(84) Etats contractants désignés:
**DE FR GB IT**

(30) Priorité: **13.02.2004 FR 0401476**

(43) Date de publication de la demande:
**25.10.2006 Bulletin 2006/43**

(73) Titulaire: **THALES**
**92200 Neuilly-sur-Seine (FR)**

(72) Inventeurs:
 • **COATANTIEC, Jacques,**
**THALES Intellectual Property**
**F-94117 Arcueil Cedex (FR)**

 • **LESOT, Bertrand,**
**THALES Intellectual Property**
**F-94117 Arcueil Cedex (FR)**

(74) Mandataire: **Beylot, Jacques et al**
**Marks & Clerk France**
**31-33 Avenue Aristide Briand**
**94117 Arcueil Cédex (FR)**

(56) Documents cités:
**WO-A-01/46712**      **FR-A- 2 830 320**
**US-A- 5 583 774**

**Description**

L'invention est relative à la surveillance de l'intégrité des informations de position et de vitesse issues d'une hybridation entre une centrale inertielle et un récepteur de positionnement par satellites. Elle concerne plus précisément un équipement de navigation connu dans la technique sous le nom de système INS/GNSS (de l'anglo-saxon "Inertial Navigation System" et "Global Navigation Satellite System") hybridé en boucle fermée, l'hybridation étant dite lâche car réalisée en axes géographiques.

Une centrale inertielle est constituée d'un ensemble de capteurs inertiels (capteurs gyrométriques et capteurs accélérométriques) associé à une électronique de traitement. Une plate-forme de calcul, appelée plate-forme virtuelle PFV, délivre alors les informations de vitesse et de position du porteur dans un référentiel précis (souvent noté TGL, Trièdre Géographique Local). La plate-forme virtuelle PFV permet la projection et l'intégration des données issues des capteurs inertiels. La centrale inertielle fournit des informations précises à court terme mais dérivant sur le long terme (sous l'influence des défauts capteurs). La maîtrise des défauts capteurs représente une proportion très importante du coût de la centrale inertielle.

Un récepteur de positionnement par satellites fournit des informations de position et de vitesse du porteur par triangulation à partir des positions de satellites défilants visibles du porteur. Les informations fournies peuvent être momentanément indisponibles car le récepteur doit avoir en vue directe un minimum de quatre satellites du système de positionnement pour pouvoir faire un point. Elles sont en outre d'une précision variable, dépendant de la géométrie de la constellation à la base de la triangulation, et bruitées car reposant sur la réception de signaux de très faibles niveaux provenant de satellites éloignés ayant une faible puissance d'émission. Mais elles ne souffrent pas de dérive à long terme, les positions des satellites défilants sur leurs orbites étant connues avec précision sur le long terme. Les bruits et les erreurs peuvent être liés aux systèmes satellitaires, au récepteur ou à la propagation du signal entre l'émetteur satellitaire et le récepteur de signaux GNSS. En outre, les données satellites peuvent être erronées par suite de pannes affectant les satellites. Ces données non intègres doivent alors être repérées pour ne pas fausser la position issue du récepteur GNSS.

Pour prévenir les pannes satellites et assurer l'intégrité des mesures GNSS, il est connu d'équiper un récepteur de positionnement par satellites d'un système d'estimation de précision et de disponibilité dit RAIM (de l'anglo-saxon "Receiver Autonomous Integrity Monitoring") qui se base sur la géométrie de la constellation de satellites utilisée lors de la triangulation et sur l'évolution prévisible à court terme de cette géométrie déduite de la connaissance des trajectoires des satellites. Cependant, ce système, purement lié au système de localisation par satellites, n'est pas applicable à la surveillance d'un point de localisation issu d'un système hybride (INS/GNSS) et ne peut détecter que certains types de pannes en un temps donné.

L'hybridation consiste à combiner mathématiquement les informations de position et de vitesse fournies par la centrale inertielle et le récepteur de positionnement par satellites pour obtenir des informations de position et de vitesse en tirant avantage des deux systèmes. Ainsi, la précision sur le positionnement fourni par le système GNSS permet de maîtriser la dérive inertielle et les mesures inertielles peu bruitées permettent de filtrer le bruit sur les mesures du récepteur GNSS. Cette combinaison fait très souvent appel à la technique de filtrage de Kalman.

Le filtrage de Kalman s'appuie sur les possibilités de modélisation de l'évolution de l'état d'un système physique considéré dans son environnement, au moyen d'une équation dite "d'évolution" (estimation a priori), et de modélisation de la relation de dépendance existant entre les états du système physique considéré et les mesures par lesquelles il est perçu de l'extérieur, au moyen d'une équation dite "d'observation" pour permettre un recalage des états du filtre (estimation a posteriori). Dans un filtre de Kalman, la mesure effective ou "vecteur de mesure" permet de réaliser une estimée a posteriori de l'état du système qui soit optimale dans le sens où elle minimise la covariance de ferreur faite sur cette estimation. La partie estimateur du filtre génère des estimées a priori du vecteur d'état du système en utilisant l'écart constaté entre le vecteur de mesure effectif et sa prédiction a priori pour engendrer un terme correctif, appelé innovation. Cette innovation est appliquée à l'estimée a priori du vecteur d'état du système et conduit à l'obtention de l'estimée optimale a posteriori.

Dans le cas d'un système INS/GNSS hybridé, le filtre de Kalman reçoit les points de position et de vitesse fournis par la centrale inertielle et le récepteur de positionnement par satellites, modélise l'évolution des erreurs de la centrale inertielle et délivre l'estimée a posteriori de ces erreurs qui sert à corriger le point de positionnement et de vitesse de la centrale inertielle.

L'estimation des erreurs de position et de vitesse dues aux défauts des capteurs inertiels apparaissant en sortie de la plate-forme virtuelle PFV de la centrale inertielle est réalisée par le filtre de Kalman. La correction des erreurs par le biais de leur estimation faite par le filtre de Kalman peut alors se faire en entrée de la plate-forme virtuelle PFV (architecture en boucle fermée) ou en sortie (architecture en boucle ouverte).

Lorsque les défauts des capteurs de la centrale inertielle ne sont pas trop importants, il n'est pas nécessaire d'appliquer les corrections en entrée de la plate-forme virtuelle PFV. La modélisation du système (linéarisation des équations régissant l'évolution du système), au sein du filtre reste valide. L'estimée a posteriori des erreurs de la centrale inertielle calculée dans le filtre de Kalman n'est utilisée que pour l'élaboration de l'estimée optimale de la position et de la vitesse du porteur compte tenu des informations de position et de vitesse fournies par la centrale inertielle et par le récepteur GNSS. L'hybridation est alors dite en boucle ouverte.

Lorsque les défauts inertiels sont trop importants la linéarisation des équations régissant l'évolution du modèle inertiel intégré au sein du filtre de Kalman n'est plus valide. Il est donc impératif d'appliquer les corrections à la plateforme virtuelle PFV pour rester dans le domaine linéaire. L'estimée a posteriori des erreurs la centrale inertielle calculée dans le filtre de Kalman sert non seulement à l'élaboration de l'estimée optimale de la position et de la vitesse du porteur mais aussi au recalage de la centrale inertielle au sein de la plate-forme virtuelle PFV. L'hybridation est alors dite en boucle fermée.

L'hybridation peut également se faire en observant des informations GNSS de natures différentes. Soit on considère les position et vitesse du porteur résolues par le récepteur GNSS. On parle alors d'hybridation lâche. Soit on considère les informations extraites en amont par le récepteur GNSS que sont les pseudo-distances et les pseudo-vitesses (grandeurs directement isssues de la mesure du temps de propagation et de l'effet Doppler des signaux émis par les satellites en direction du récepteur). On parle alors d'hybridation serrée.

Avec un système INS/GNSS en boucle fermée où le point résolu par le récepteur GNSS est utilisé pour recaler les informations provenant de la centrale inertielle, il est nécessaire de prêter une attention particulière aux défauts affectant les informations fournies par les satellites car le récepteur qui les reçoit propagera ces défauts à la centrale inertielle en entraînant un mauvais recalage de cette dernière. Le problème se pose de façon particulièrement critique pour assurer l'intégrité d'un point hybride INS/GPS.

Une manière connue de procéder à la surveillance de l'intégrité d'un système hybride INS/GNSS en boucle fermée est décrite dans le brevet américain US 5,583,774. Elle consiste à espacer les recalages d'un temps suffisamment long (par exemple 30 minutes) pour qu'un détecteur à base de filtres de Kalman surveillant l'évolution des écarts de mesures de pseudo-distance et de pseudo-vitesse par rapport au porteur de chaque satellite visible ait pu isoler les satellites défaillants.

Un autre procédé connu pour surveiller l'intégrité d'un système hybride INS/GNSS est décrit dans le brevet américain US 5,923,286. Il consiste à utiliser un équipement RAIM pour autoriser ou non l'hybridation. Lorsque l'équipement RAIM signale une perte d'intégrité, l'hybridation est gelée et le point de position et de vitesse est fourni par la centrale INS en tenant compte de ses dérives et biais mesurées juste avant la perte d'intégrité. Pour que cela marche, il faut que la centrale inertielle n'ait pas été polluée par l'erreur de point commise par le récepteur GNSS, ce qui interdit de la recaler avec le récepteur GNSS. Le procédé est donc réservé uniquement au système hybrides INS/GNSS en boucle ouverte.

La présente invention a pour but une surveillance de l'intégrité des informations de position et de vitesse d'un système hybride constitué d'une centrale inertielle recalée à l'aide d'un récepteur GNSS en utilisant la position et la vitesse résolues du porteur issues du récepteur GNSS.

Elle a pour objet un dispositif de surveillance de l'intégrité d'un système hybride constitué d'une centrale inertielle INS, d'un récepteur de positionnement par satellites GNSS opérant à partir d'une constellation de N satellites visibles et d'un filtre de Kalman d'hybridation ayant un vecteur d'états correspondants aux erreurs du système hybride, en particulier, les erreurs de biais et de dérive résiduelles de la centrale inertielle INS, observant les écarts entre les points de positionnement et de vitesse fournis, en coordonnées géographiques, par la centrale inertielle INS et par le récepteur GNSS, comportant une matrice d'évolution F modélisant l'évolution des erreurs du système hybride, une matrice d'observation H modélisant les relations liant le vecteur d'états et les écarts observés entre les positions et les vitesses délivrées par la centrale inertielle INS et le récepteur GNSS, et un gain K minimisant la covariance de l'erreur faite sur l'estimation a posteriori des erreurs de position et de vitesse issues de la centrale inertielle, et délivrant une estimée a posteriori des erreurs du système hybride qui sert à recaler la centrale inertielle. Ce système de surveillance est remarquable en ce que le récepteur GNSS délivré, en plus d'un point de position effectué à partir des N satellites de la constellation qu'il a en vue, N-1 points de position effectués à partir de la constellation des N satellites visibles privée, à chaque fois, d'un satellite différent et en ce qu'il comporte un circuit détecteur de problème satellite comportant un banc de N filtres prédicteurs-estimateurs de l'erreur induite par le satellite qui a été ôté lors de la résolution d'un point à N-1 satellites, ayant le gain K et la matrice d'évolution F du filtre de kalman d'hybridation, observant chacun l'écart entre le point de position, en coordonnées géographiques, délivré par le récepteur GNSS en observant les N satellites visibles et l'un des points de position, également en coordonnées géographiques, délivrés par le récepteur GNSS en observant N-1 satellites visibles et des circuits de test comparant les états des N filtres prédicteurs-estimateurs à leurs variances et détectant une panne satellite lorsque le test est positif, l'écart trouvé étant supérieur à un seuil de détection.

Avantageusement, les circuits de test ont des seuils de détection de panne satellite qui résultent de tests statistiques tenant compte de la covariance associée au type d'erreur de positionnement considéré.

Avantageusement, les circuits de test ont des seuils de détection de panne satellite qui résultent de tests statistiques tenant compte de la covariance associée au type d'erreur de positionnement considéré et qui sont fonction du taux de fausse alarme acceptable pour le test.

Avantageusement, le système de surveillance comporte un circuit d'inhibition des recalages intercalé entre la sortie du filtre de Kalman d'hybridation et une entrée de recalage de la centrale inertielle, et activé par un test positif de détection de problème satellite.

Avantageusement, les filtres prédicteurs-estimateurs du circuit détecteur de problème satellite (premier banc de filtre) ont tous la même matrice d'observation.

Avantageusement, le récepteur GNSS délivre en plus des points de position, en coordonnées géographiques, effectués à partir des N satellites visibles et ceux effectués à partir de N-1 satellites déduits de la constellation formée par les N satellites visibles en retirant à chaque fois un satellite visible différent, Nx(N-1)/2 points de position avec N-2 satellites déduits des N satellites visibles en retirant à chaque fois deux satellites visibles différents, et le système de surveillance comporte un circuit identificateur de satellite défaillant composé d'un deuxième banc de Nx(N-1)/2 filtres de prédicteurs-estimateurs d'écarts de positionnement ayant le gain K et la matrice d'évolution F du filtre de Kalman d'hybridation, observant chacun l'écart entre un point de position, en coordonnées géographiques, délivré par le récepteur GNSS à partir de N-1 satellites parmi les N visibles et l'un des points de positionnement délivrés par le récepteur de positionnement par satellites à partir de N-2 satellites parmi les N visibles déduite de la constellation spécifique de (N-1) satellites visibles privée de l'un de ses satellites visibles, les filtres estimateurs-détecteurs pouvant être regroupés par familles de N-2 éléments en fonction de la constellation spécifique de N-1 satellites visibles prise en compte, des circuits de test comparant les états des Nx(N-1)/2 filtres prédicteurs-estimateurs par rapport à leurs variances afin de détecter une éventuelle anomalie et un circuit de traitement identifiant, en cas d'anomalie détectée, un satellite fautif comme étant le satellite exclu d'un point à n-1 satellites dont la famille de filtres prédicteurs-estimateurs est la seule à n'avoir aucun de ses éléments détectant une anomalie

Avantageusement, les filtres prédicteurs-estimateurs du circuit identificateur de satellite défaillant ont tous la même matrice d'observation.

Avantageusement, les filtres prédicteurs-estimateurs du détecteur de problème satellite et du circuit identificateur de satellite défaillant ont tous la même matrice d'observation.

D'autres caractéristiques et avantages de l'invention ressortiront de la description ci-après d'un mode de réalisation donné à titre d'exemple. Cette description sera faite en regard du dessin dans lequel :

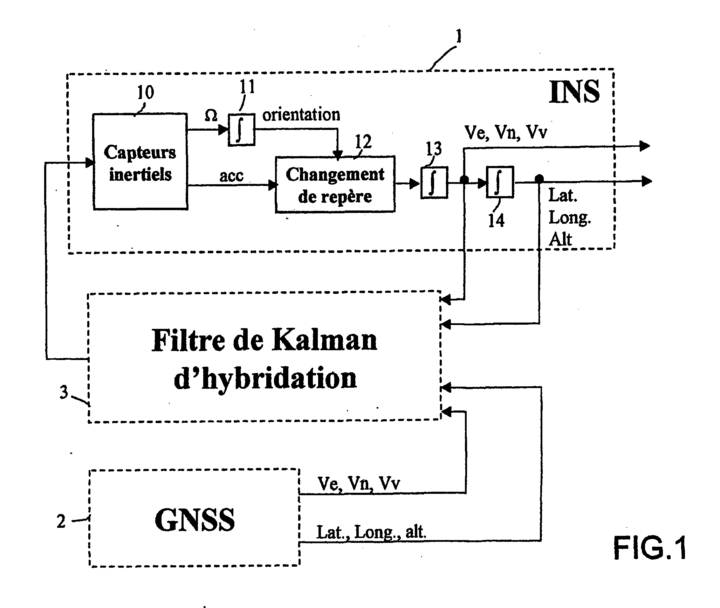

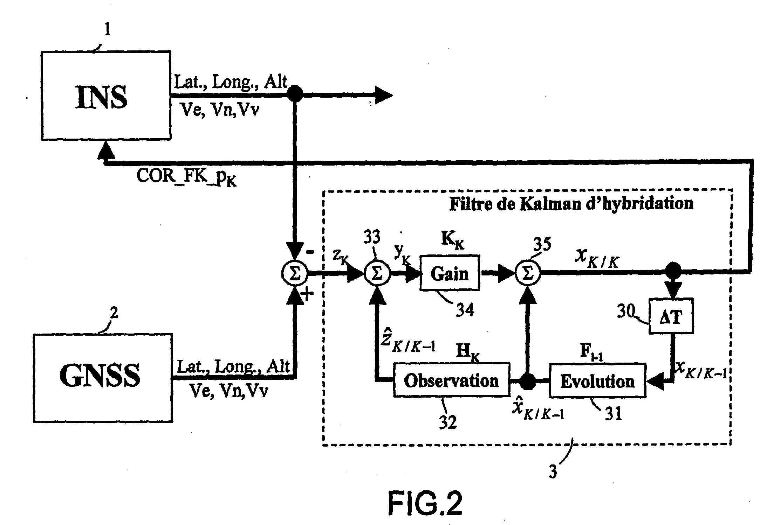

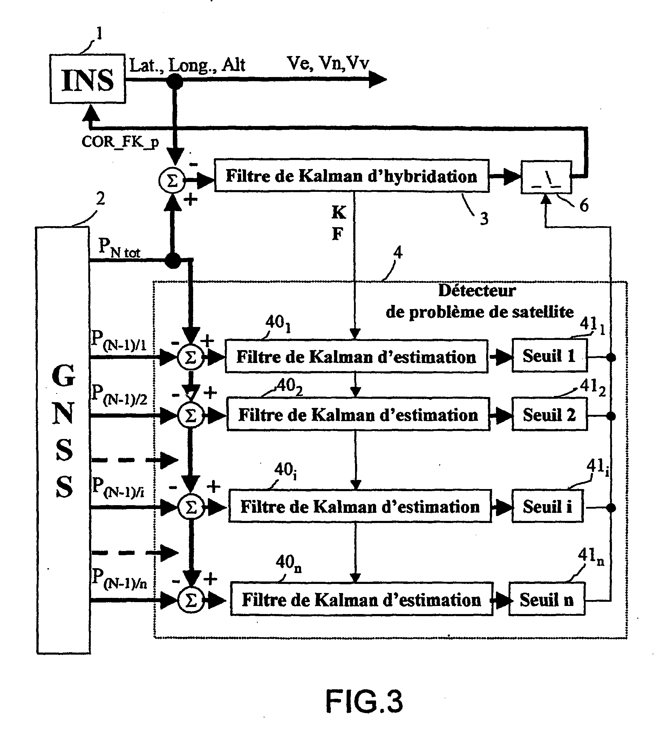

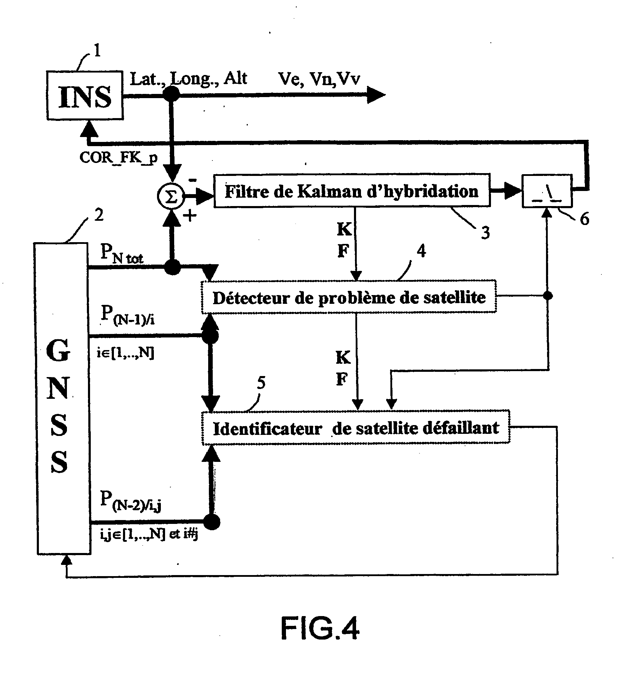

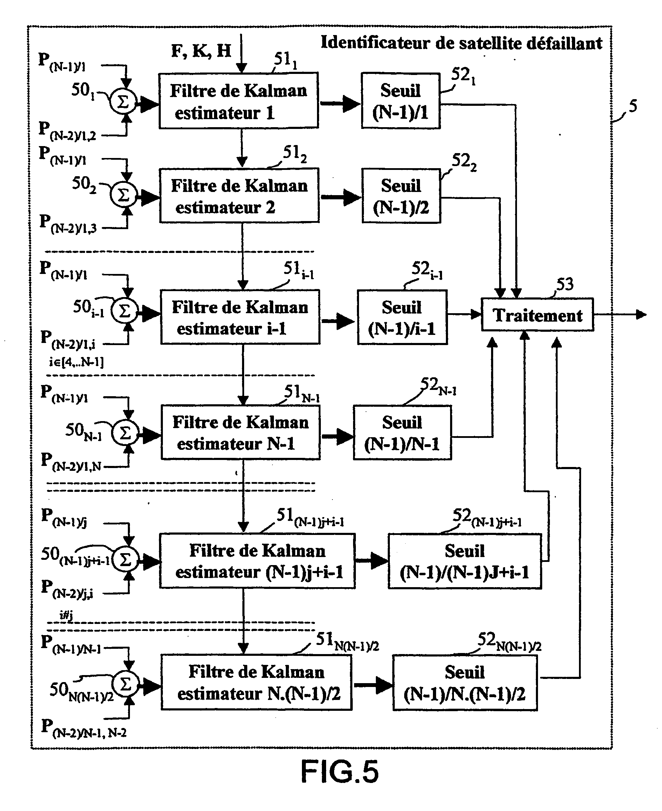

- des figures 1 et 2 représentent le schéma de principe d'un système hybride de positionnement INS/GNSS de type lâche en boucle fermée, la figure 1 détaillant la centrale inertielle et la figure 2 le filtre de Kalman,
- une figure 3 représente un système hybride de positionnement INS/GNSS pourvu d'un circuit détecteur de problème satellite conforme à l'invention,
- une figure 4 représente un système hybride de positionnement INS/GNSS pourvu d'un circuit détecteur de problème satellites et d'un circuit d'identificateur de satellite fautif conforme à l'invention, et
- une figure 5 détaille la constitution du circuit identificateur de satellite fautif de la figure 4.

La figure 1 montre l'architecture d'un système hybride de positionnement équipé d'une centrale inertielle 1 et d'un récepteur de positionnement par satellites GNSS 2, dit en boucle fermée et de type lâche car il se sert des informations de position (latitude, longitude et attitude) et de vitesse (vitesse nord, vitesse est et vitesse verticale) résolues du porteur délivrées par le récepteur GNSS 2 pour le recalage de la centrale inertielle INS 1.

Comme montré, la centrale inertielle comporte un ensemble 10 de capteurs inertiels (accéléromètres et gyromètres) et de circuits de calcul, appelés plate forme virtuelle PFV, pour effectuer les calculs de position, attitude et vitesses sur les sorties des capteurs inertiels. La plate-forme virtuelle PFD comporte principalement un ensemble d'intégrateurs 11 opérant sur les signaux $\Omega$ des gyromètres afin d'en déduire l'attitude du porteur, un changeur de repère 12 permettant, à partir de la connaissance de l'orientation du porteur (attitude) du porteur, d'exprimer dans un repère géographique lié à la terre, les accélérations acc mesurées par les accéléromètres dans un repère lié au porteur et deux ensembles intégrateurs successifs 13, 14 opérant sur les composantes de l'accélération selon le repère géographique pour en déduire les composantes de la vitesse du porteur par rapport au nord Vn, par rapport à l'est Ve et par rapport à la verticale Vv ainsi que la position du porteur en latitude, longitude et altitude. Les capteurs inertiels souffrent de défauts inhérents à leur conception : des biais et des dérives qui font que les informations de position et d'attitude délivrées par une centrale inertielle se dégradent avec le temps de fonctionnement. La lutte contre ces défauts est coûteuse, ainsi il existe différentes classes de centrale inertielle en fonction des tolérances de biais et de dérives acceptées.

Le récepteur GNSS 2 est, par exemple un récepteur GPS. Il mesure les pseudo-distances et pseudo-vitesses du porteur par rapport à au moins quatre satellites visibles du porteur du système hybride de positionnement et résout, par triangulation, la position du porteur en latitude, longitude et altitude ainsi que les composantes de sa vitesse par rapport au nord Vn, par rapport à l'est Ve et par rapport à la verticale Vv. Il ne sera pas détaillé plus avant car il est bien connu de l'homme du métier et largement décrit dans la littérature où de nombreux ouvrages lui ont été consacrés, par exemple le livre de Elliot D. KAPLAN intitulé "Understanding GPS Principles and Applications" paru chez Artech House Publishers ISBN 0-89006-793-7. Les informations de position et de vitesse délivrées par un récepteur GNSS ne souffrent pas de dérive puisqu'elles proviennent de mesures instantanées des éloignements et vitesses d'éloignement de satellites dont les orbites et les positions sur leurs orbites sont connues à long terme. Par contre, elles souffrent d'indisponibilités, lorsque qu'il n'y a pas un minimum de quatre satellites visibles. Elles sont bruitées car elles proviennent du traitement de signaux reçus qui sont de très faibles niveaux d'énergie en raison de la distance d'éloignement des satellites et de leurs faibles puissances d'émission et qui peuvent avoir été corrompus en cours de transmission (rencontre de particules chargées entre le satellite et le récepteur). Leur fiabilité dépend de celle des informations transmises par les satellites.

Par rapport au récepteur GNSS, la centrale inertielle a l'avantage de ne pas faire appel à la collaboration d'équipements extérieurs au porteur et donc de ne pas être aussi sensible à l'extérieur. L'intégrité et la disponibilité des informations inertielles étant bien meilleures, la centrale inertielle conserve tout son intérêt Pour lutter contre sa dérive et ses biais autrement que par des mesures coûteuses prises au niveau de ses capteurs inertiels, il a été proposé de la recaler périodiquement au moyen du point de position et de vitesse fourni par un récepteur GNSS, après un filtrage antibruit.

Ce recalage se fait au moyen d'un filtre de Kalman 3 dit d'hybridation montré de manière plus détaillée à la figure 2.

Un filtre de Kalman permet d'obtenir une estimation de l'état a posteriori d'un système, optimale dans le sens où la covariance de l'erreur faite sur cette estimation a posteriori est minimale (on parle aussi d'estimation optimale au sens des moindres carrés). IL se base sur une modélisation de l'évolution du système et sur une modélisation de la relation existant entre la mesure et l'état du système.

Dans sa plus grande généralité, la modélisation de l'évolution de l'état du système est définie par une équation différentielle vectorielle linéarisée au premier ordre qui s'exprime, après discrétisation du modèle continu, par une équation d'évolution de la forme:

$$x_{K+1} = F_K x_K + L_K u_i + w_K$$

x étant le vecteur d'état de dimension p, u un vecteur de contrôle, $F_K$ la matrice d'évolution définissant la relation entre le vecteur d'état à l'étape K et le vecteur d'état à l'étape K+1 en l'absence de vecteur de contrôle et de bruit de fonctionnement, $L_K$ une matrice définissant la relation entre le vecteur de contrôle et le vecteur d'état au cours d'une même étape et $w_K$ un bruit de fonctionnement au cours d'une étape, supposé blanc et gaussien à valeur moyenne nulle.

La modélisation de la relation existant entre la mesure et l'état du système est définie par une autre équation différentielle du premier ordre qui s'exprime, après discrétisation du modèle continu, par une équation d'observation de la forme:

$$z_K = H_K x_K + v_K$$

z étant le vecteur de mesure (grandeurs du systèmes physiquement observables) de dimension m, $H_K$ la matrice d'observation définissant la relation entre le vecteur de mesure et le vecteur d'état au cours d'une même étape et $v_K$ un bruit de mesure au cours d'une étape supposé blanc et gaussien à valeur moyenne nulle.

Le filtre de Kalman montré à la figure 2 ne comporte pas de vecteur de contrôle et donc pas de matrice $L_K$. Il est récursif et repose sur la détermination d'une estimation a priori $\hat{x}_{K/K-1}$ du vecteur d'état du système à l'étape K à partir de la connaissance a posteriori du vecteur d'état du système $x_{K-1/K-1}$ à l'étape précédente K-1 et de l'application à l'estimée a priori $\hat{x}_{K/K-1}$ d'un terme correcteur dépendant de l'écart constaté entre le vecteur mesure $z_K$ constaté au cours de cette étape K et son estimée a priori $\hat{z}_{K/K-1}$ déduite de l'estimation a priori $\hat{x}_{K/K-1}$ du vecteur d'état.

L'estimée a priori $\hat{z}_{K/K-1}$ du vecteur de mesure à l'étape K est déterminée par application des équations d'évolution et d'observation à l'estimée a posteriori $x_{K-1/K-1}$ du vecteur d'état correspondant à l'étape K-1 précédente. Cette opération est illustrée sur la figure 2 par la présence d'une boucle de rétroaction constituée d'un circuit à retard 30 et de deux filtres 31, 32.

Le circuit à retard 30 connecté en sortie du filtre de Kalman permet de mémoriser l'estimée a posteriori $x_{K-1/K-1}$ du vecteur d'état disponible à la sortie du filtre de Kalman au cours de l'étape précédente K-1.

Le filtre 31 permet, par mise en oeuvre de l'équation d'évolution, l'obtention de l'estimée à priori $\hat{x}_{K/K-1}$ du vecteur d'état à l'étape K, à partir de l'estimée a posteriori $\hat{x}_{K-1/K-1}$ du vecteur d'état du système à l'étape précédente K-1. Sa fonction de transfert est définie par la matrice $F_{K-1}$ de l'équation d'évolution.

Cette estimée a priori $\hat{x}_{K/K-1}$ du vecteur d'état à l'étape K est ensuite utilisée pour obtenir, au moyen d'un deuxième filtre 32, l'estimée a priori $\hat{z}_{K/K-1}$ du vecteur de mesure à l'étape K par application de l'équation d'observation.

Ce deuxième filtre 32 a, pour ce faire, une fonction de transfert définie par la matrice $H_K$ de l'équation d'observation.

L'estimée a priori $\hat{z}_{K/K\text{-}1}$ du vecteur de mesure à l'étape K obtenue dans la boucle de rétroaction est appliquée, en entrée du filtre de Kalman, à un circuit soustracteur 33 qui reçoit par ailleurs le vecteur de mesure $z_K$ effectivement mesuré au cours de l'étape K et qui délivre un vecteur d'erreur $r_K$, également appelé innovation, attestant de l'erreur commise lors de l'estimation a priori. Ce vecteur d'erreur $r_K$ est transformé par un troisième filtre 34 en un vecteur de correction. Ce vecteur de correction est additionné par un deuxième sommateur 35 à l'estimée a priori $\hat{x}_{K/K\text{-}1}$ du vecteur d'état pour l'étape K issue du premier filtre 31, pour obtenir l'estimée a posteriori $x_{K/K}$ du vecteur d'état qui constitue la sortie du filtre de Kalman.

Le troisième filtre 34, qui fournit le terme correctif, est connu sous le nom de filtre de gain de recalage. Il a une fonction de transfert définie par une matrice $K_K$ déterminée de façon à minimiser la covariance de l'erreur faite sur l'estimation a posteriori.

Kalman a montré que la matrice de gain optimal $K_K$ pouvait être déterminée par une méthode récursive à partir des équations:

- de la matrice de covariance de l'estimée a priori du vecteur d'état

$$P_{K/K\text{-}1} = F_{K\text{-}1} P_{K\text{-}1/K\text{-}1} F_{K\text{-}1}^T + Q_{K\text{-}1}$$

- de définition de la matrice de gain elle-même

$$K_K = P_{K/K\text{-}1} H_K^T \left( H_K P_{K/K\text{-}1} H_K^T + R_K \right)^{-1}$$

- de mise à jour de la matrice de covariance de l'estimée a posteriori du vecteur d'état

$$P_{K/K} = (I - K_K H_K) P_{K/K\text{-}1}$$

P étant la matrice de covariance du vecteur d'état, soit estimée a priori pour l'étape K à partir de l'étape K-1 si P est affecté de l'indice K/K-1, soit estimée a posteriori si P est affecté de l'indice K-1/K-1,
R étant la matrice de covariance des bruits d'observation $w_K$,
Q étant la matrice de covariance des bruits d'état (ou de fonctionnement) $v_K$.

A l'initialisation, la matrice de covariance du vecteur d'état et le vecteur d'état sont pris égaux à leurs estimées les plus vraisemblables. Au pire, la matrice de covariance est une matrice diagonale avec des termes infinis ou très grands (de façon à avoir des écarts-type très grands devant le domaine dans lequel le vecteur d'état est susceptible d'évoluer) et l'estimée du vecteur d'état le vecteur nul, lorsque l'on n'a aucune idée sur les valeurs initiales.

En pratique, le gain de correction d'un filtre de Kalman est "proportionnel" à l'incertitude sur l'estimation a priori de l'état du système et "inversement proportionnel" à l'incertitude sur la mesure. Si la mesure est très incertaine et l'estimation de l'état du système relativement précise, l'écart constaté est principalement dû au bruit de mesure et la correction qui en découle doit être faible. Au contraire, si l'incertitude sur la mesure est faible et celle sur l'estimation de l'état du système grande, l'écart constaté est très représentatif de l'erreur d'estimation et doit conduire à une correction forte. C'est le comportement vers lequel on tend avec le filtre de Kal man.

En résumé, un filtre de Kalman sans vecteur de contrôle est défini par une matrice $F_K$ correspondant à l'équation d'évolution définissant l'évolution du vecteur d'état du système physique modélisé, une matrice $H_K$ correspondant à l'équation d'observation définissant les relations permettant de passer du vecteur d'état au vecteur de mesure et une matrice de gain $K_K$ mise à jour à l'aide d'un processus itératif mettant en jeu la matrice de covariance du vecteur d'état P elle-même mise à jour au cours du processus itératif et des matrices de covariance $Q_K$ et $R_K$ des bruits d'état et de mesure.

Le filtre de Kalman 3 opère au niveau des écarts constatés entre deux versions des informations de même type provenant l'une, de la centrale inertielle INS 1 et l'autre, du récepteur GNSS 2, car cela permet de travailler sur des variables ayant des domaines de variation plus restreints sur lesquels l'approximation linéaire peut être utilisée pour simplifier les équations de modélisation et d'évolution (on parle alors de filtre aux erreurs).

Dans ce cadre, l'équation d'évolution du filtre de Kalman modélise l'évolution prévisible des erreurs sur le système hybride liés aux résidus des défauts capteurs inertiels non estimés et à la mécanisation de la plate forme inertielle (ici boucle fermée) de la centrale inertielle 1 qu'il déduit des différences constatées entre la prévision d'écart qu'il fait et les écarts effectivement mesurés entre la position et la vitesse issues de la centrale inertielle et du récepteur GNSS. Elle est déterminée par la matrice F dont la définition est fonction du mouvement du porteur, c'est-à-dire des paramètres de vol dans le cas où le porteur équipé du système hybride de positionnement est un aéronef. La définition des différentes versions de cette matrice F en fonction des paramètres du mouvement du porteur sort du domaine de la présente invention. Elle ne sera pas détaillée dans la suite car elle est bien connue de l'homme du métier spécialisé dans le domaine de l'inertie.

Les résidus $x_{K/K}$ des erreurs du système hybride estimés a posteriori par le filtre de Kalman d'hybridation 3 sont utilisés pour le recalage de la centrale inertielle INS 1 (boucle fermée). Les informations inertielles INS 1 étant régulièrement recalées, les points de position et de vitesse hybrides sont supposés plus fiables à condition que les mesures GNSS soient intègres.

Pour résumer, le traitement effectué par le filtre de Kalman d'hybridation se divise en trois temps :

- Propagation du vecteur d'état et de la matrice de variance-covariance associée

$$X_{K+1/K} = F_{K+1} X_{K/K} + COR\_FK\_p_K$$

$$P_{K+1/K} = F_K P_{K/K} F_K^T + Q_K$$

- Recalage du vecteur d'état et de la matrice de variance-covariance à l'aide du gain $K_{K+1}$

$$K_{K+1} = P_{K+1/K} H_{K+1}^T \cdot \left( H_{K+1} P_{K+1/K} H_{K+1}^T + R_{K+1} \right)^{-1}$$

$$X_{K+1/K+1} = X_{K+1/K} + K_{K+1} \cdot (Z_{K+1} - H_{K+1} X_{K+1/K})$$

$$P_{K+1/K+1} = P_{K+1/K} - K_{K+1} H_{K+1} P_{K+1/K}$$

- Application des corrections issues du filtre de Kalman d'hybridation à la centrale inertielle

$$COR\_FK\_p_K = -X_{K/K}$$

La matrice d'observation $H_{K+1}$ permet l'observation des différences entre les positions et vitesses issues de la plate-forme virtuelle PFV et les positions et vitesses GNSS résolues. La matrice d'évolution $F_{K+1}$ est calculée en utilisant les données de la plate-forme virtuelle PFV corrigées par le filtre de Kalman et permet la propagation de l'état et de la matrice de variance-covariance associée.

Le problème rencontré avec les systèmes hybrides de positionnement INS/GNSS en boucle fermée est le risque de voir les opérations de recalage propager à la centrale inertielle 1 les erreurs de position et de vitesse commises par le récepteur GNSS 2 en raison d'informations défectueuses lui parvenant d'un ou plusieurs satellites défaillants (mauvaises corrections appliquées par le filtre de Kalman à la plate-forme virtuelle PFV, mauvaise estimation des défauts inertiels). L'intégrité du système hybride de positionnement INS/GNSS en boucle fermée est alors difficile à assurer.

La figure 3 illustre le schéma d'un système hybride INS/GNSS en boucle fermée équipé d'un détecteur de problème satellite opérant à partir des points de position, en coordonnées géographiques, effectués par le récepteur GNSS 2 avec tous les satellites visibles supposés au nombre de N et avec tous les satellites visibles moins l'un d'entre eux, le satellite visible écarté étant l'un quelconque d'entre eux.

Le détecteur de problème satellite 4 comporte un banc de N filtres prédicteurs-estimateurs $40_1$, $40_2$,..., $40_i$,..., $40_N$ associé à un banc de circuits de test $41_1$, $41_2$,..., $41_i$,...,$41_N$ contrôlant, par un circuit inhibiteur 5 intercalé à la sortie du filtre de Kalman d'hybridation 3, la possibilité d'un recalage de la centrale inertielle 1.

Les filtres prédicteurs-estimateurs $40_1$, $40_2$,..., $40_i$,...,$40_N$ fonctionnent en boucle ouverte.

Le vecteur d'état du iéme filtre prédicteur-estimateur $40_i$ est composé des erreurs par rapport au vecteur d'état du filtre de Kalman d'hybridation induites par la non prise en compte dans le récepteur GNSS 2 des informations données par le iéme satellite visible et même plus généralement par rapport à des mesures faites par d'autres équipements de navigation comme un altimètre barométrique ou un anémomètre.

$$Err^i = \begin{bmatrix} erreurs\_attitude\_par\_rapport\_FK \\ erreurs\_vitesse\_par\_rapport\_FK \\ erreurs\_position\_par\_rapportFK \\ erreurs\_biais\_accéléro\_par\_rapport\_FK \\ erreurs\_dérives\_gyro\_par\_rapprot\_FK \\ erreurs\_baro\_par\_rapport\_FK \\ erreurs\_anémo\_par\_rapport\_FK \end{bmatrix}$$

Les matrices d'évolution $F_K$ des différents filtres prédicteurs-estimateurs $40_1$, $40_2$,..., $40_i$,...,$40_N$ sont identiques à celle $F_K$ du filtre de Kalman d'hybridation 3 :

$$\hat{Err}^i_{K+1/K} = F_{K+1}.Err^i_{K/K} \qquad (1)$$

La mesure $Z^1$ d'un ième filtre prédicteur-estimateur $40_i$ est constituée de l'écart entre la position, en coordonnées géographiques (latitude, longitude et altitude), résultant du point de positionnement $P_{N\,tot}$ effectué par le récepteur GNSS 2 en tenant compte de tous les N satellites visibles et la position, en coordonnées géographiques, résultant du point de positionnement $P_{(N-1)/i}$ effectué par le récepteur GNSS 2 en écartant les informations envoyées par le ième satellite :

$$Z^i = \begin{pmatrix} \Delta x^i \\ \Delta y^i \\ \Delta z^i \end{pmatrix} = P_{N-1/i} - P_{Ntot}$$

Les matrices H d'observation des différents filtres prédicteurs-estimateurs $40_1$, $40_2$,..., $40_i$,..., $40_N$ sont toutes identiques et correspondent à l'équation d'observation permettant de passer du vecteur d'état $Err^i$ au vecteur de mesure $Z^i$.

Les gains des différents filtres prédicteurs-estimateurs $40_1$, $40_2$,..., $40_i$,...,$40_N$ sont tous pris égaux à celui K du filtre de Kalman d'hybridation 3 de façon que le recalage sur les mesures $z^i$ qu'ils reçoivent se passe comme le recalage du filtre de Kalman d'hybridation 3.

Compte tenu de ces choix, les recalages des vecteurs d'état $Err^i$ des filtres prédicteurs-estimateurs $40_1$, $40_2$,..., $40_i$,...,$40_N$ répondent à la relation :

$$Err^i_{K+1/K+1} = Err^i_{K+1/K} + K_{K+1}.\left(Z_{K+1}{}^i - H_{K+1}.Err^i_{K+1/K}\right) \qquad (2)'$$

Pour détecter la défaillance de l'un au moins des N satellites visibles par le récepteur de positionnement GNSS 2, on effectue des tests statistiques sur les vecteurs d'état $Err^i$ disponibles en sortie des différents filtres prédicteurs-estimateurs $40_1$, $40_2$,..., $40_i$,...,$40_N$ au moyen du banc des circuits de test $41_1$, $41_2$,..., $41_i$,...,$41_N$. Ces circuit de test réalisent des tests statistiques consistant à admettre une panne de satellite si, pour i allant de 1 au nombre N de satellites visibles, l'une des deux inégalités sur les erreurs de position des filtres prédicteurs-estimateurs $40_1$, $40_2$,..., $40_i$,...,$40_N$ suivantes est vérifiée :

$$\left|Err^i_{K+1/K}(err\_lat)^* Err^i_{K+1/K}(err\_lat)\right| > K\_seuil^*.K\_seuil.COV\_Err^i_{K+1/K}(err\_lat)$$

ou

$$\left[ Err_{K+1/K}^{i}(err\_lon)^{*}.Err_{K+1/K}^{i}(err\_lon) \right] > K\_seuil^{*}.K\_seuil.COV\_Err_{K+1/K}^{i}(err\_lon)$$

.

La variable K_seuil contrôle indirectement la valeur de l'erreur radiale acceptable. Elle est choisie en fonction du taux recherché de fausse alarme. Pour une probabilité de fausse alarme de $10^{-6}$, on prendra une valeur de 5,06 environ (répartition gaussienne) pour la variable K_seuil.

La réalisation de ces tests statistiques implique que l'on soit capable de propager et de recaler les variances associées aux vecteurs d'état $Err^{i}$ des différents filtres prédicteurs-estimateurs $40_1$, $40_2$,..., $40_i$,...,$40_N$. La propagation et le recalage peuvent se dérouler ainsi :

A l'initialisation, on pose :

$$COV\_Err_{0/0}^{i} = [0]$$

[0] étant la matrice nulle.

A la première propagation, par définition :

$$COV\_Err_{1/0}^{i} = E\left[ \hat{Err}_{1/0}^{i}.Err_{1/0}^{i\ T} \right]$$

ce qui s'écrit en raison de la relation (1) :

$$COV\_Err_{1/0}^{i} = E\left[ \left( F_{1}.Err_{0/0}^{i} + u_{1}^{i} \right)\left( F_{1}.Err_{0/0}^{i} + u_{1}^{i} \right)^{T} \right]$$

$u^{i}$ étant un bruit blanc (bruit d'état).

D'où :

$$COV\_Err_{1/0}^{i} = F_{1}.COV\_Err_{0/0}^{i}.F_{1}^{T} + Q_{1}$$

F étant la matrice d'évolution du filtre de Kalman d'hybridation 3 et $Q_1$ la matrice de covariance des bruits d'état du filtre de Kalman d'hybridation 3.

Au premier recalage, par définition :

$$COV\_Err_{1/1}^{i} = E\left[ Err_{1/1}^{i}.Err_{1/1}^{i\ T} \right]$$

ce qui s'écrit, en tenant compte de la relation (2) :

$$COV\_Err_{1/1}^{i} = E\left[ \left( Err_{1/0}^{i} + K_{1}.\left( Z^{i} - H_{1}.Err_{1/0}^{i} \right) \right)\left( Err_{1/0}^{i} + K_{1}.\left( Z^{i} - H_{1}.Err_{1/0}^{i} \right) \right)^{T} \right]$$

En développant cette expression, on trouve :

$$COV\_Err_{1/1}^{i} = E\left[Err_{1/0}^{i} \; Err_{1/0}^{i}{}^{T}\right] + K_{1}.E\left[Z_{i} \; Z^{i}{}^{T}\right]K_{1}{}^{T} + K_{1}.H_{1}.E\left[Err_{1/0}^{i} \; Err_{1/0}^{i}{}^{T}\right]H_{1}{}^{T}.K_{1}{}^{T}...$$
$$... - E\left[Err_{1/0}^{i} \; Err_{1/0}^{i}{}^{T}\right]H_{1}{}^{T}.K_{1}{}^{T} - K_{1}.H_{1}.E\left[Err_{1/0}^{i} \; Err_{1/0}^{i}{}^{T}\right]$$

D'où:

$$COV\_Err_{1/1}^{i} = (I - K_{1}.H_{1}).COV\_Err_{1/0}^{i}.(I - K_{1}.H_{1})^{T} + K_{1}.E\left[Z^{i} \; Z^{i}{}^{T}\right]K_{1}{}^{T}$$

1 étant la matrice identité.

Le premier terme de l'expression du recalage de la matrice de covariance se calcule à partir de la matrice d'observation $H_1$ des filtres prédicteurs-estimateurs $40_1$, $40_2$,..., $40_i$,...,$40_N$ et de la matrice de gain $K_1$ du filtre de Kalman d'hybridation 3. Le deuxième terme se calcule au moyen des matrices de variance-covariance utilisées dans les calculs des moindres carrés effectués pour la résolution des position, vitesse et temps dans le récepteur GNSS 2, lors des points de positionnement à N et (N-1) satellites. En effet, lors de cette résolution, la méthode des moindres carrés évalue le degré de confiance sur les points résolus par l'intermédiaire des matrices de variances covariances (matrices E $[P_{(n-1)/I}.P_{(n-1)/I}{}^{T}]$ pour les N points à (N-1) satellites et $E[P_{tot}.P_{tot}{}^{T}]$ pour le point à N satellites).
Or:

$$E\left[Z^{i} \; Z^{i}{}^{T}\right] = E\left[\left(P_{(N-1)/i} - P_{tot}\right)\left(P_{(N-1)/i} - P_{tot}\right)^{T}\right]$$

Car:

$$Z^{i} = \begin{pmatrix} \Delta x^{i} \\ \Delta y^{i} \\ \Delta z^{i} \end{pmatrix} = P_{(N-1)/i} - P_{tot}$$

En développant la première expression, on obtient :

$$E\left[Z^{i} \; Z^{i}{}^{T}\right] = E\left[P_{(N-1)/i}.P_{(N-1)/i}{}^{T}\right] + E\left[P_{tot}.P_{tot}{}^{T}\right] - E\left[P_{(N-1)/i}.P_{tot}{}^{T}\right] - E\left[P_{tot}.P_{(N-1)/i}{}^{T}\right]$$

Les deux premiers termes sont connus. Ils sont directement fournis par les calculs des moindres carrés lors de la résolution des différents points de position, vitesse et temps effectués par le récepteur GNSS 2.

Les termes $E\left[P_{(N-1)/i}.P_{tot}{}^{T}\right]$ et $E\left[P_{tot}.P_{(N-1)/i}{}^{T}\right]$, traduisant l'inter-corrélation entre le point de positionnement $P_{tot}$ à N satellites et les points de positionnement $P_{(N-1)/i}$ à (N-1) satellites, peuvent être évalués en reprenant l'expression des moindres carrés de chaque point.
En effet, on a :

$$P_{(N-1)/i} = H_{(N-1)/i}^{*}.d$$

$H^*_{(N-1)/i}$ étant la matrice pseudo-inverse utilisée dans la résolution position, vitesse et temps faite lors du point de positionnement effectué à N-1 satellites (absence du ième satellite) :

$H^*_{(N-1)/i} = \left( H^T_{(N-1)/i}.H_{(N-1)/i} \right)^{-1} H^T_{(N-1)/i}$ étant construite à partir de la matrice $H_{(N-1)i}$ qui est la matrice des cosinus directeurs liant les pseudo-distances d à la position résolue par la *relation :* $d = H_{(N-1)/i}.\ P_{(N-1)/i}$

d étant le vecteur formé par les pseudo-distances.

Ainsi :

$$E\left[ P_{(N-1)/i}.P^T_{tot} \right] = E\left[ \left( H^*_{(N-1)/i}.d \right)\left( H^*_{tot}.d \right)^T \right]$$
$$= E\left[ d.d^T \right] H^*_{(N-1)/i}.H^{*T}_{tot}$$

Or:

$$H^*_{(N-1)/i}.H^{*T}_{tot} = \left( H^T_{(N-1)/i}.H_{(N-1)/i} \right)^{-1} H^T_{(N-1)/i}.H_{tot}.\left\{ \left( H^T_{tot}.H_{tot} \right)^{-1} \right\}^T$$

et:

$$\left\{ \left( H^T_{tot}.H_{tot} \right)^{-1} \right\}^T = \left( H^T_{tot}.H_{tot} \right)^{-1}$$

car la relation :

$$\left( H^T_{tot}.H_{tot} \right)^{-1}\left( H^T_{tot}.H_{tot} \right) = I$$

entraîne :

$$\Leftrightarrow \left\{ \left( H^T_{tot}.H_{tot} \right)^{-1}\left( H^T_{tot}.H_{tot} \right) \right\}^T = I$$
$$\Leftrightarrow H^T_{tot}.H_{tot}.\left\{ \left( H^T_{tot}.H_{tot} \right)^{-1} \right\}^T = I$$
$$\Leftrightarrow \left( H^T_{tot}.H_{tot} \right)^{-1} = \left\{ \left( H^T_{tot}.H_{tot} \right)^{-1} \right\}^T$$

De ce fait :

$$H^*_{(N-1)/i}.H^{*T}_{tot} = \left( H^T_{(N-1)/i}.H_{(N-1)/i} \right)^{-1} H^T_{(N-1)/i}.H_{tot}.\left( H^T_{tot}.H_{tot} \right)^{-1}$$

En outre, on a l'égalité suivante :

$$H^T_{tot}.H_{(N-1)/i} = H^T_{(N-1)/i}H_{(N-1)/i}$$

La matrice $H_{(N-1)/i}$ ne diffère de la matrice $H_{tot}$ que par la ième ligne qui est nulle dans le cas de la matrice $H_{(N-1)/i}$ et qui comporte les cosinus directeurs de la ligne à vue du ième satellite dans le cas de la matrice $H_{tot}$. En effectuant le produit de matrices $\boldsymbol{H_{tot}^T.H_{(N-1)/i}}$, les termes de la ième colonne de la matrice $\boldsymbol{H_{tot}^T}$ sont multipliés par les termes nuls de la matrice $H_{(N-1)/i}$. Ainsi, si les termes de la ième colonne d'une matrice multipliée par la matrice $H_{(N-1)/i}$ sont déjà nuls (comme dans le cas de la matrice $\boldsymbol{H_{(N-1)/i}^T}$), il n'y a pas de changement. Cela explique l'égalité ci-dessus. Par conséquent :

$$H_{(N-1)/i}^*.H_{tot}^{*T} = \left(H_{(N-1)/i}^T.H_{(N-1)/i}\right)^{-1}.H_{(N-1)/i}^T.H_{(N-1)/i}.\left(H_{tot}^T.H_{tot}\right)^{-1}$$
$$= \left(H_{tot}^T.H_{tot}\right)^{-1}$$
$$= H_{tot}^*.H_{tot}^{*T}$$

donc :

$$E\left[P_{(N-1)/i}.P_{tot}^T\right] = E\left[P_{tot}.P_{tot}^T\right]$$

Finalement, nous avons la relation :

$$E\left[Z^i.Z^{iT}\right] = E\left[P_{(N-1)/i}.P_{(N-1)/i}^T\right] - E\left[P_{tot}.P_{tot}^T\right]$$

qui montre que la matrice $E[Z^i.Z^{iT}]$ peut être évaluée à partir des matrices issues des calculs des différents points de position, vitesse et temps effectués par le récepteur GNSS 2.
Le premier recalage et la première propagation ne posent donc pas de problème. Les matrices d'évolution $F_1$ et de gain $K_1$ utilisées sont celles du filtre de Kalman d'hybridation 3 tandis que la matrice d'observation H est commune à tous les filtres prédicteurs-estimateurs $40_1$, $40_2$,..., $40_i$,...,$40_N$.
Par récurrence, il est possible de montrer qu'il en est de même pour les recalages et propagations suivants.
Dès qu'au moins un des tests statistiques est levé ou positif, il y a suspicion de mauvais fonctionnement de l'un des satellites visibles sur lesquels se base le récepteur GNSS 2 pour déterminer position et vitesse du porteur. Ce franchissement est utilisé pour déclencher le circuit inhibiteur 5 intercalé entre la sortie du filtre de Kalman d'hybridation 3 et l'entrée de recalage de la centrale inertielle 1, le satellite fournissant des données erronées ne sera réintégré que lorsque tous les tests statistiques ne seront plus levés, avec éventuellement un délai supplémentaire de précaution.
On remarque qu'il est également possible d'estimer un rayon de protection sur la position hybride issue de la centrale inertielle 1 en utilisant la méthode du maximum de séparation.
Le circuit 4 de détection de problème satellite ne permet pas d'identifier le satellite fautif car l'information erronée provenant de ce satellite est prise en compte dans le point à N satellites visibles qui sert de référence.
Sachant que l'un des satellites visibles utilisés par le récepteur GNSS 2 émet des informations suspectes, il est intéressant de pouvoir l'identifier pour le faire mettre à l'écart par le récepteur GNSS 2.
La figure 4 donne un exemple de schéma d'un système hybride INS/GNSS en boucle fermée équipé d'un détecteur de problème satellite et d'un identificateur de satellite défaillant.
Comme dans le cas de la figure 3, on retrouve une centrale inertielle INS 1, un récepteur GNSS 2, un filtre de Kalman d'hybridation 3 opérant sur les résidus des erreurs entre la position, en coordonnées géographiques, donnée par la centrale inertielle INS 1 et celle, également en coordonnées géographiques, donnée par le récepteur GNSS 2 et fournissant des informations de recalage à la centrale inertielle INS 1, et un circuit 4 de détection de problème de satellites analogue à celui de la figure 3 commandant un circuit d'inhibition 5 intercalé entre la sortie du filtre de Kalman d'hybridation 3 et une entrée de recalage de la centrale inertielle INS 1.
En plus de ces éléments apparaît un circuit 6 identificateur de satellite défaillant opérant à partir de différents points de position, en coordonnées géographiques, effectués par le récepteur GNSS 2 avec tous les satellites visibles moins un et avec tous les satellites visibles moins deux, les deux satellites visibles écartés étant à chaque fois différents.

Ce circuit 6 identificateur de satellite défaillant fonctionne en parallèle du circuite 4 de détection de problème satellite. Il est activé par le circuit 4 en cas de détection de problème de satellite. Il identifie le satellite défaillant pour le récepteur GNSS 2 qui ne le prend alors plus en compte pour faire le point de position et de vitesse qui est envoyé au filtre de Kalman d'hybridation. Une fois le satellite défaillant écarté, le circuit 6 identificateur de satellite désinhibe le circuit d'inhibition 5 et la plate-forme virtuelle PDV de la centrale inertielle INS 1 est à nouveau corrigée.

Le circuit 6 identificateur de satellite défaillant se base sur des tests en prenant comme références les différents points de position possibles avec N-1 satellites qui sont comparés à des points de position à N-2 satellites issus de ces points à N-1. Ces tests consistent à :

- évaluer, pour chaque sélection possible de N-1 satellites parmi les N observables, les écarts de position, en coordonnées géographiques, constatés entre le point de position fait par le récepteur GNSS 2 avec l'ensemble des N-1 satellites de la sélection et les différents points de position possibles à N-2 satellites que peut faire le récepteur GNSS 2 en écartant un satellite supplémentaire de la sélection,
- soumettre ces écarts à un banc de filtres prédicteurs-estimateurs pour évaluer l'erreur induite conjointement par deux satellites,
- comparer les états de ce deuxième banc de filtres prédicteurs-estimateurs avec les variances qui leurs sont associées,
- identifier la famille de filtres ne levant pas leur test statistique et en déduire le satellite en panne,
- indiquer au récepteur GNSS le satellite corrompu pour le retirer de l'ensemble des satellites visibles utilisés pour résoudre le point de position (et de vitesse) à N satellites communiqué au filtre de Kalman
- désinhiber les corrections fournies par le filtre de Kalman à la centrale à inertie une fois le satellite défecteux retiré du point du récepteur GNSS et le filtre reconfiguré.

En effet, ce n'est que lorsque le satellite fautif est évincé de la sélection de N-1 satellites et des sélections de N-2 satellites qui en découlent que les tests statistiques sur les états des filtres prédicteurs-estimateurs ne se déclencheront pas (tests non levés).

Comme montré à la figure 5, le circuit 6 identificateur de satellite défaillant comporte un banc de N.(N-1)/2 filtres prédicteurs-estimateurs $61_{i,j}$ ($1 \leq i < j \leq N$, i et j désignent les satellites non observés lors de la résolution du point à N-2 fourni au filtre prédicteur-estimateur) traitant toutes les possibilités d'écarts entre un point de position, en coordonnées géographiques, à N-1 satellites visibles et un point de position, également en coordonnées géographiques, à N-2 satellites visibles, le satellite exclu de la sélection à N-1 satellite l'étant également de la sélection à N-2 satellites. Un circuit de test $62_{i,j}$ associé à chaque filtre prédicteur-estimateur $61_{i,j}$ du banc teste les états modélisés dans le filtre prédicteur-estimateur par rapport à leurs variances. Un circuit de traitement 63 extrait des tests fournis par les circuits de tests $62_{i,j}$ l'identité du satellite fautif.

Chacun des filtres prédicteurs-estimateurs $61_{i,j}$ du banc de filtre dédié à l'identification du satellite en panne a la même configuration que les filtres prédicteurs-estimateurs $40_i$ du banc de filtres dédiés à la détection de défaillance d'un satellite avec les mêmes matrices de gain K, d'évolution F et d'observation H, et reçoit, comme mesure, l'écart fourni par un circuit soustracteur $60_{i,j}$ entre la position, en coordonnées géographiques (latitude, longitude et altitude), résultant d'un point de positionnement $P_{(N-1)/l}$ effectué par le récepteur de positionnement par satellites GNSS 2 en tenant compte des N satellites visibles moins un, le $i^{\text{ème}}$ et la position en coordonnées géographiques résultant d'un point de positionnement $P_{(N-2)/i,j}$ effectué par le récepteur de positionnement par satellites GNSS 2 en écartant les informations du satellite déjà exclu, le $i^{\text{ème}}$ et d'un autre, le $j^{\text{ème}}$.

Les calculs des variances associées nécessaires aux circuits de tests $62_{i,j}$ pour comparer les états par rapport à leurs variances sont exactement les mêmes que ceux décrits pour les circuits de test $41_l$ associés aux filtres prédicteurs-estimateurs $40_l$ du premier banc et ne seront pas repris ici. Seule l'observation est différente puisqu'il s'agit ici de différence entre des points résolus avec (N-1) satellites visibles et des points résolus avec (N-2) satellites visibles.

Le circuit de traitement 63 compare les tests des N différentes familles, où le $i^{\text{ème}}$ satellite a été enlevé pour la résolution du point de position à N-1 et des points de position à N-2 satellites ($1 \leq i \leq N$), puis identifie le satellite défectueux par le fait que seuls les filtres prédicteurs-estimateurs d'une famille, celle ne prenant jamais en compte le satellite défectueux n'a aucun test statistique levé. En effet, outes les autres familles de filtres prédicteurs-estimateurs comparant les points de position à N-1 où le satellite défaillant est présent avec des points de position à N-2 satellites ont au moins un test statistique levé. Ce circuit de traitement 63 permet d'éviter l'utilisation du satellite corrompu dans la résolution du point GNSS fourni au système hybride.

Pour faciliter la compréhension, les fonctions réalisées dans un dispositif de surveillance de l'intégrité d'un système hybride INS/GNSS ont été illustrées sous forme de blocs séparés mais il est bien évident qu'elles peuvent être remplies par un même calculateur à logique programmé, par exemple le calculateur de gestion du vol si le porteur du système hybride de positionnement est un aéronef.

**Revendications**

1. Dispositif de surveillance de l'intégrité d'un système hybride constitué d'une centrale inertielle INS (1), d'un récepteur de positionnement par satellites GNSS (2) opérant à partir d'une constellation de N satellites visibles, et d'un filtre de Kalman d'hybridation (3) ayant un vecteur d'états correspondant aux erreurs du système hybride, en particulier les erreurs de biais et de dérive résiduelles de la centrale inertielle INS (1), observant les écarts entre les points de positionnement et de vitesse fournis, en coordonnées géographiques, par la centrale inertielle INS (1) et par le récepteur GNSS (2), ayant une matrice d'évolution F modélisant l'évolution des erreurs du système hybride, une matrice d'observation H modélisant les relations entre le vecteur d'états et les écarts observés entre les positions et de vitesses délivrées par la centrale inertielle INS (1) et le récepteur GNSS (2), et un gain K minimisant la covariance de l'erreur faite sur l'estimation a posteriori du vecteur d'états du filtre de Kalman et en particulier des erreurs résiduelles de la centrale inertielle INS (1), et délivrant une estimée a posteriori des erreurs du système hybride qui sert à recaler la centrale inertielle INS (1), **caractérisé en ce que** le récepteur GNSS (2) délivre en plus d'un point de position effectué à partir des N satellites visibles qu'il a en vue, des points de position $P_{(N-1)/i}$, $i \in [1,..N]$ résolus avec N-1 satellites visibles déduits de la constellation des N satellites visibles en la privant à chaque fois d'un satellite différent et **en ce qu'**il comporte un circuit (4) détecteur de problème satellite comportant un banc de N filtres prédicteurs-estimateurs ($40_i$) de l'erreur induite par le satellite qui a été ôté lors de la résolution d'un point de position à N-1 satellites, ayant le gain K et la matrice d'évolution F du filtre de Kalman d'hybridation (3), observant chacun l'écart entre le point de position, en coordonnées géographiques, délivré par le récepteur GNSS (2) en observant les N satellites visibles et l'un des points de position $P_{(N-1)/i}$, également en coordonnées géographiques, délivrés par le récepteur GNSS (2) en observant N-1 satellites visibles et des circuits de test ($41_i$) comparant les états des filtres prédicteurs-estimateurs ($40_i$) à leurs variances et détectant une panne satellite lorsque le test est positif, l'écart trouvé étant supérieur à un seuil de détection.

2. Dispositif selon la revendication 1, **caractérisé en ce que** les seuils de détection sont des seuils statistiques qui tiennent compte de la covariance associée au type d'erreur de positionnement considéré.

3. Dispositif selon la revendication 1, **caractérisé en ce que** les seuils de détection sont des seuils statistiques qui tiennent compte de la covariance associée au type d'erreur de positionnement considéré et qui sont fonction du taux de fausse alarme acceptable pour le test.

4. Dispositif selon la revendication 1, **caractérisé en ce qu'**il comporte un circuit (5) d'inhibition de recalage intercalé entre la sortie du filtre de Kalman d'hybridation (3) et une entrée de recalage de la centrale inertielle INS (1), et activé par le circuit (4) détecteur de problème satellite.

5. Dispositif selon la revendication 1, **caractérisé en ce que** les filtres prédicteurs-estimateurs ($40_i$) du circuit (4) détecteur de problème satellite ont tous la même matrice d'observation.

6. Dispositif selon la revendication 1, **caractérisé en ce que** le récepteur GNSS (2) délivre des points de position $P_{(N-1)/i}$ $i \in [1,..N]$ et $P_{(N-2)/i,j}$ ($1 \le i < j \le N$), en coordonnées géographiques, résolus à partir de N-1 et N-2 satellites déduits des N satellites visibles en retirant à chaque fois un satellite visible différent, le $i^{ème}$ pour le point $P_{(N-1)/I}$, et en retirant en plus un autre satellite parmi les N -1 restant, le $j^{ème}$ pour le point $P_{(N-2)/i,j}$, et **en ce qu'**il comporte un circuit (6) identificateur de satellite défaillant comportant un banc de Nx(N-1)/2 filtres prédicteurs-estimateurs ($61_{i,j}$) estimateur de l'erreur induite conjointement par deux satellites parmi les N observables ayant le gain K et la matrice d'évolution F du filtre de kalman d'hybridation (3), observant chacun l'écart entre un point de position ($P_{(N-1)/i}$), en coordonnées géographiques, délivré par le récepteur GNSS (2) à partir d'une constellation spécifique de N-1 satellites visibles et l'un des points de position $P_{(N-2)/i,j}$ délivrés par le récepteur GNSS (2) à partir d'une constellation de (N-2) satellites visibles déduite de la constellation spécifique de (N-1) satellites visibles privée de l'un de ses satellites, le $j^{ème}$, les filtres prédicteurs-estimateurs pouvant être regroupés par familles de N-2 éléments en fonction de la constellation spécifique de N-1 satellites prise en compte, un banc de circuits de test ($62_{i,j}$) comparant les états des filtres prédicteurs-estimateurs ($61_{i,j}$) à leurs variances et détectant une anomalie lorsque l'écart trouvé est supérieur à un seuil de détection, et un circuit de traitement des résultats des tests (63) centralisant les tests levés identifiant, en cas d'anomalie détectée, un satellite fautif comme étant le satellite exclu d'un point de position résolu avec N-1 satellites dont la famille de filtres prédicteurs-estimateurs est la seule à n'avoir aucun de ses éléments détectant une anomalie.

7. Dispositif selon la revendication 6, **caractérisé en ce que** les seuils de détection des circuits de test ($62_{i,j}$) du circuit (6) identificateur de satellite défaillant sont des seuils statistiques tenant compte de la covariance associée au type d'erreur de positionnement considéré.

**8.** Dispositif selon la revendication 7, **caractérisé en ce que** les seuils de détection des circuits de test ($62_{i,j}$) du circuit (6) identificateur de satellite défaillant sont des seuils statistiques qui tiennent compte de la covariance associée au type d'erreur de positionnement considéré et qui sont fonction du taux de fausse alarme acceptable pour le test.

**9.** Dispositif selon la revendication 6, **caractérisé en ce que** les filtres prédicteurs-estimateurs ($61_{i,j}$) du circuit (6) identificateur de satellite défaillant ont tous la même matrice d'observation.

**10.** Dispositif selon la revendication 6, **caractérisé en ce que** les filtre prédicteurs-estimateurs ($40_i$, $61_{i,j}$) du circuit (4) détecteur de problème satellite et du circuit (6) identificateur de satellites défaillant ont tous la même matrice d'observation.

**Claims**

**1.** Device for monitoring the integrity of a hybrid system comprising an inertial unit INS (1), a GNSS satellite positioning receiver (2) operating on the basis of a constellation of N visible satellites, and a Kalman hybridization filter (3) having a state vector corresponding to the errors of the hybrid system, in particular the bias and residual drift errors of the inertial unit INS (1), observing the deviations between the positioning and speed points supplied, in the form of geographic coordinates, by the inertial unit INS (1) and by the GNSS receiver (2), having an evolution matrix F modeling the trend of the errors of the hybrid system, an observation matrix H modeling the relationships between the state vector and the deviations observed between the positions and speeds delivered by the inertial unit INS (1) and the GNSS receiver (2), and a gain K minimizing the covariance of the error made on the a posteriori estimation of the state vector of the Kalman filter and in particular of the residual errors of the inertial unit INS (1), and delivering an a posteriori estimate of the errors of the hybrid system used to reset the inertial unit INS (1), **characterized in that** the GNSS receiver (2) delivers, in addition to a position point obtained from the N visible satellites that it has in view, position points $P_{(N-1)/i}$, $i \in [1, ..N]$ etc., resolved with N-1 visible satellites deducted from the constellation of the N visible satellites by depriving it each time of a different satellite and **in that** it comprises a satellite problem-detector circuit (4) comprising a bank of N predictor/estimator filters ($40_i$) of the error induced by the satellite that was removed on resolving a position point with N-1 satellites, having the gain K and the evolution matrix F of the Kalman hybridization filter (3), each filter observing the deviation between the position point, in the form of geographic coordinates, delivered by the GNSS receiver (2) by observing the N visible satellites and one of the position points $P_{(N-1)/i}$, also in the form of geographic coordinates, delivered by the GNSS receiver (2) by observing N-1 visible satellites and test circuits ($41_i$) comparing the states of the predictor/estimator filters ($40_i$) with their variances and detecting a satellite failure when the test is positive, the deviation found being greater than a detection threshold.

**2.** Device according to Claim 1, **characterized in that** the detection thresholds are statistical thresholds that take account of the covariance associated with the type of positioning error concerned.

**3.** Device according to Claim 1, **characterized in that** the detection thresholds are statistical thresholds that take account of the covariance associated with the type of positioning error concerned and that are a function of the acceptable false alarm ratio for the test.

**4.** Device according to Claim 1, **characterized in that** it comprises a reset inhibition circuit (5) inserted between the output of the Kalman hybridization filter (3) and a reset input of the inertial unit INS (1), and activated by the satellite problem-detector circuit (4).

**5.** Device according to Claim 1, **characterized in that** the predictor/estimator filters ($40_i$) of the satellite problem-detector circuit (4) all have the same observation matrix.

**6.** Device according to Claim 1, **characterized in that** the GNSS receiver (2) delivers position points $P_{(N-1)/i}$ $i \in [1,..N]$ and $P_{(N-2)/i,j}$ ($1 \leq i < j \leq N$), in the form of geographic coordinates, resolved from N-1 and N-2 satellites deducted from the N visible satellites by each time removing a different visible satellite, the $i^{th}$ for the point $P_{(N-1)/i}$, and by also removing another satellite from the remaining N-1, the $j^{th}$ for the point $P_{(N-2)/i,j}$, and **in that** it comprises a malfunctioning-satellite identification circuit (6) comprising a bank of Nx(N-1)/2 predictor/estimator filters ($61_{i,j}$) estimating the error induced jointly by two satellites out of the N observable satellites having the gain K and the evolution matrix F of the Kalman hybridization filter (3), each filter observing the deviation between a position point ($P_{(N-1)/i)}$, in the form of geographic coordinates, delivered by the GNSS receiver (2) from a specific constellation of N-1 visible satellites and one of the position points $P_{(N-2)/i,j}$ delivered by the GNSS receiver (2) from a constellation of (N-2) visible satellites deducted from the specific constellation of (N-1) visible satellites deprived of one of its satellites, the $j^{th}$, the predictor/estimator filters being able to be grouped in families of N-2 elements according to the specific constellation of N-1 satellites taken into account, a bank of test circuits $(62_{i,j})$ comparing the states of the predictor/estimator filters $(61_{i,j})$ with their variances and detecting an anomaly if the deviation found is greater than a detection threshold, and a circuit for processing the results of the tests (63) centralizing the tests raised identifying, if anomalies are detected, a faulty satellite as being the satellite excluded from a position point resolved with N-1 satellites for which the family of predictor/estimator filters is the only one not to have any of its elements detecting an anomaly.

7. Device according to Claim 6, **characterized in that** the detection thresholds of the test circuits $(62_{i,j})$ of the circuit (6) identifying malfunctioning satellites are statistical thresholds taking account of the covariance associated with the type of positioning error concerned.

8. Device according to Claim 7, **characterized in that** the detection thresholds of the test circuits $(62_{i,j})$ of the circuit (6) identifying malfunctioning satellites are statistical thresholds that take account of the covariance associated with the type of positioning error concerned and that are a function of the acceptable false alarm ratio for the test.

9. Device according to Claim 6, **characterized in that** the predictor/estimator filters $(61_{i,j})$ of the malfunctioning-satellite identification circuit (6) all have the same observation matrix.

10. Device according to Claim 6, **characterized in that** the predictor/estimator filters $(40_i, 61_{i,j})$ of the satellite problem-detector circuit (4) and of the malfunctioning-satellite identification circuit (6) all have the same observation matrix.

**Patentansprüche**

1. Vorrichtung zur Überwachung der Integrität eines hybriden Systems bestehend aus einem Trägheitsnavigationsleitsystem INS (1), einem GNSS-Satellitenortungsempfänger (2), der ausgehend von einer Konstellation von N sichtbaren Satelliten arbeitet, und einem Hybridisierungs-Kalmanfilter (3), das einen Zustandsvektor entsprechend den Fehlern des hybriden Systems, insbesondere den Verzerrungs- und Abweichungs-Restfehlern des Trägheitsnavigationsleitsystems INS (1) aufweist, das die Abweichungen zwischen den gelieferten Ortungs- und Geschwindigkeitspunkten beobachtet, die vom Trägheitsnavigationsleitsystem INS (1) und vom GNSS-Empfänger (2) in geographischen Koordinaten geliefert werden, das eine Entwicklungsmatrix F, die die Entwicklung der Fehler des hybriden Systems modellisiert, eine Beobachtungsmatrix H, die die Beziehungen zwischen dem Zustandsvektor und den zwischen den Positionen und den Geschwindigkeiten, die vom Trägheitsnavigationsleitsystem INS (1) und vom GNSS-Empfänger (2) geliefert werden, beobachteten Abweichungen modellisiert, und eine Verstärkung K hat, die die Kovarianz des Fehlers minimiert, der bei der a-posteriori-Schätzung des Zustandsvektors des Kalmanfilters und insbesondere der Restfehler des Trägheitsnavigationsleitsystems INS (1) gemacht wurde, und einen a-posteriori-Schätzwert der Fehler des hybriden Systems liefert, der dazu dient, das Trägheitsnavigationsleitsystem INS (1) neu einzustellen, **dadurch gekennzeichnet, dass** der GNSS-Empfänger (2) zusätzlich zu einem Positionspunkt, den er ausgehend von den N sichtbaren Satelliten, die er im Sichtfeld hat, verwirklicht, Positionspunkte $P_{(N-1)/i}$, i ∈ [1,..N] liefert, aufgelöst mit N-1 sichtbaren Satelliten, die aus der Konstellation der N sichtbaren Satelliten abgeleitet werden, indem er ihr jedes Mal einen anderen Satelliten entzieht, und dass sie eine Satellitenproblem-Erfassungsschaltung (4), die eine Bank von N Prädiktor-Schätzer-Filtern $(40_i)$ des Fehlers aufweist, der von dem Satelliten induziert wurde, der bei der Auflösung eines Positionspunkts mit N-1 Satelliten entfernt wurde, mit der Verstärkung K und der Entwicklungsmatrix F des Hybridisierungs-Kalmanfilters (3), die je die Abweichung zwischen dem Positionspunkt in geographischen Koordinaten, der vom GNSS-Empfänger (2) geliefert wird, indem er die N sichtbaren Satelliten beobachtet, und einem der Positionspunkte $P_{(N-1)/i}$, ebenfalls in geographischen Koordinaten, beobachtet, die vom GNSS-Empfänger (2) geliefert werden, indem er N-1 sichtbare Satelliten beobachtet, und Testschaltungen $(41_i)$ aufweist, die die Zustände der Prädiktor-Schätzer-Filter $(40_i)$ mit ihren Varianzen vergleichen und einen Satellitenausfall erfassen, wenn der Test positiv ist, wobei die gefundene Abweichung über einer Erfassungsschwelle liegt.

2. Vorrichtung nach Anspruch 1, **dadurch gekennzeichnet, dass** die Erfassungsschwellen statistische Schwellwerte sind, die die Kovarianz berücksichtigen, die dem betrachteten Ortungsfehler zugeordnet ist.

3. Vorrichtung nach Anspruch 1, **dadurch gekennzeichnet, dass** die Erfassungsschwellen statistische Schwellwerte sind, die die Kovarianz berücksichtigen, die dem betrachteten Ortungsfehler zugeordnet ist, und die von der Fehlalarmrate abhängen, die für den Test akzeptabel ist.

4. Vorrichtung nach Anspruch 1, **dadurch gekennzeichnet, dass** sie eine Schaltung (5) zur Verhinderung der Neueinstellung aufweist, die zwischen den Ausgang des Hybridisierungs-Kalinanfilters (3) und einen Neueinstellungseingang des Trägheitsnavigationsleitsystems INS (1) eingefügt ist und von der Satellitenproblem-Erfassungsschaltung (4) aktiviert wird.

5. Vorrichtung nach Anspruch 1, **dadurch gekennzeichnet, dass** die Prädiktor-Schätzer-Filter ($40_i$) der Satellitenproblem-Erfassungsschaltung (4) alle die gleiche Beobachtungsmatrix haben.

6. Vorrichtung nach Anspruch 1, **dadurch gekennzeichnet, dass** der GNSS-Empfänger (2) Positionspunkte $P_{(N-1)/i}$ $i \in [1,..N]$ und $P_{(N-2)/i,j}$ ($1 \leq i < j \leq N$) in geographischen Koordinaten liefert, aufgelöst ausgehend von N-1 und N-2 Satelliten, die von den N sichtbaren Satelliten abgeleitet werden, indem jedes Mal ein anderer sichtbarer Satellit entfernt wird, der i-te für den Punkt $P_{(N-1)/i}$, und indem zusätzlich ein anderer Satellit von den N-1 verbliebenen entfernt wird, der j-te für den Punkt $P_{(N-2)/i,j}$, und dass sie eine Identifikationsschaltung (6) eines ausgefallenen Satelliten, die eine Bank von Nx(N-1)/2 Prädiktor-Schätzer-Filtern ($61_{i,j}$) aufweist, die den Fehler schätzt, der gemeinsam von zwei Satelliten unter den N beobachtbaren Satelliten induziert wird, mit der Verstärkung K und der Entwicklungsmatrix F des Hybridisierungs-Kalmanfilters (3), die je die Abweichung zwischen einem Positionspunkt $(P_{(N-1)/i})$ in geographischen Koordinaten, der vom GNSS-Empfänger (2) ausgehend von einer spezifischen Konstellation von N-1 sichtbaren Satelliten geliefert wird, und einem der Positionspunkte $P_{(N-2)/i,j}$ beobachten, die vom GNSS-Empfänger (2) ausgehend von einer spezifischen Konstellation von (N-2) sichtbaren Satelliten geliefert werden, die von der spezifischen Konstellation von (N-1) Satelliten, der einer ihrer Satelliten, der j-te, entzogen wurde, abgeleitet wird, wobei die Prädiktor-Schätzer-Filter in Familien von N-2 Elementen in Abhängigkeit von der spezifischen Konstellation von N-1 berücksichtigten Satelliten zusammengefasst werden können, eine Bank von Testschaltungen ($62_{i,j}$), die die Zustände der Prädiktor-Schätzer-Filter ($61_{i,j}$) mit ihren Varianzen vergleicht und eine Anomalie erfasst, wenn die gefundene Abweichung über einer Erfassungsschwelle liegt, und eine Verarbeitungsschaltung der Testergebnisse (63) aufweist, die die aufgenommenen Tests zentralisiert und im Fall einer erfassten Anomalie einen fehlerhaften Satelliten als denjenigen Satelliten identifiziert, der von einem mit N-1 Satelliten aufgelösten Positionspunkt ausgeschlossen ist, deren Familie von Prädiktor-Schätzer-Filtern die einzige ist, von der keines ihrer Elemente eine Anomalie feststellt.

7. Vorrichtung nach Anspruch 6, **dadurch gekennzeichnet, dass** die Erfassungsschwellen der Testschaltungen ($62_{i,j}$) der Identifikationsschaltung (6) eines ausgefallenen Satelliten statistische Schwellwerte sind, die die Kovarianz berücksichtigen, die dem betrachteten Ortungsfehlertyp zugeordnet ist.

8. Vorrichtung nach Anspruch 7, **dadurch gekennzeichnet, dass** die Erfassungsschwellen der Testschaltungen ($62_{i,j}$) der Identifikationsschaltung (6) eines ausgefallenen Satelliten statistische Schwellwerte sind, die die Kovarianz berücksichtigen, die dem betrachteten Ortungsfehlertyp zugeordnet ist, und die von der Fehlalarmrate abhängen, die für den Test akzeptabel ist.

9. Vorrichtung nach Anspruch 6, **dadurch gekennzeichnet, dass** die Prädiktor-Schätzer-Filter ($61_{i,j}$) der Identifikationsschaltung (6) eines ausgefallenen Satelliten alle die gleiche Beobachtungsmatrix haben.

10. Vorrichtung nach Anspruch 6, **dadurch gekennzeichnet, dass** die Prädiktor-Schätzer-Filter ($40_i$, $61_{i,j}$) der Satellitenproblem-Erfassungsschaltung (4) und der Identifikationsschaltung (6) von ausgefallenen Satelliten alle die gleiche Beobachtungsmatrix haben.

FIG.1

EP 1 714 166 B1

**FIG.2**

EP 1 714 166 B1

EP 1 714 166 B1

FIG.3

FIG.4

FIG.5

**EP 1 714 166 B1**